# EUROPÄISCHE PATENTSCHRIFT

(11) **EP 0 625 436 B1**
(45) Veröffentlichungstag und Bekanntmachung des Hinweises auf die Patenterteilung: **05.03.1997**
(21) Anmeldenummer: 94890076.6
(22) Anmeldetag: 28.04.1994
(51) Int. Cl.: B60C 11/11

(54) **Fahrzeugluftreifen**
Vehicle pneumatic tyre
Bandage pneumatique pour véhicule

(30) Priorität: 18.05.1993 AT 973/93
(43) Veröffentlichungstag der Anmeldung: 23.11.1994
(73) Patentinhaber: Semperit Reifen Aktiengesellschaft, A-2514 Traiskirchen (AT)
(72) Erfinder: Petraschek, Ernst, D.I., A-2340 Mödling (AT)
(74) Vertreter: Vinazzer, Edith, Dipl.-Ing.

(56) Entgegenhaltungen:
- FR-A- 1 580 205
- GB-A- 290 853
- GB-A- 751 641
- GB-A- 1 002 317
- US-A- 3 115 919
- US-A- 3 848 651

## Beschreibung

Die vorliegende Erfindung betrifft einen Fahrzeugluftreifen mit einem Laufstreifen, welcher sich aus Profilelementen, wie Blöcken und/oder Laufstreifenbändern, zusammensetzt, und mit Nuten, insbesondere mit in Umfangsrichtung verlaufenden Nuten, Querrillen und dergleichen versehen ist, wobei im Laufstreifen Profilelemente angeordnet sind, die von zumindest einem Kanal durchsetzt sind, welcher an unterschiedlichen Profilelementbereichen nach außen mündet.

Es ist seit längerem üblich, gezielt Maßnahmen zu setzen, um das von am Untergrund abrollenden Reifen abgestrahlte Geräusch zu minimieren bzw. zu optimieren. So ist es unter anderem seit längerem bekannt, durch Anwendung und ständige Verbesserung der Technik der Pitchlängenvariation (rechnerische Optimierung der Abfolge der in unterschiedlichen Umfangslängen vorgesehenen Profilelemente) günstige Effekte zu erzielen, beispielsweise die emittierten Frequenzen auf ein breites Frequenzband im subjektiv als angenehm empfundenen Bereich zu verteilen. Ein Teil des Abrollgeräusches wird jedoch auch durch andere Effekte verursacht, etwa durch Luftkompression. So bildet sich beim Abrollen eines Reifens, insbesondere bei höheren Geschwindigkeiten, vor dem unmittelbaren Auftreffen des Laufstreifens auf den Untergrund ein Luftkeil, wodurch einerseits Luft in die Nuten gedrückt wird und hörbare Luftschwingungen sowie Blockschwingungen durch Kompressionseffekte verursacht werden. Bekannt ist in diesem Zusammenhang insbesondere der Air-Pumping Effekt, der darin besteht, daß durch Blockdeformationen beim Eintreten in den Latsch und auch beim Austreten Luft in den Nuten komprimiert wird.

Ein Reifen mit einem Laufstreifenprofil gemäß dem Oberbegriff des Anspruches 1 ist aus der GB-A-10 02 317 bekannt. Die einzelnen Profilelemente des Laufstreifens sind dabei als Blöcke ausgebildet, die jeweils zentral mit einer relativ großvolumigen Aushöhlung versehen sind. In jedem Block ist ferner ein Einschnitt angeordnet, der den Block in einen größeren, die Aushöhlung umfassenden Teil, und einen kleineren Teil gliedert. Ein dünner Kanal verbindet den Boden der Aushöhlung mit dem Einschnitt. Durch diese Ausgestaltung soll die Bodenhaftung des Reifens, insbesondere auf glattem und auf nassem Untergrund, verbessert werden.

Die Aufgabe der Erfindung besteht darin, Maßnahmen am Laufstreifen eines Reifens zu setzen, durch die die hörbaren Luftschwingungen und Blockschwingungen zumindest zum Teil reduziert werden.

Gelöst wird die gestellte Aufgabe erfindungsgemäß dadurch, daß jeder Kanal zumindest einerends in einer Nut, insbesondere im Bereich des Nutgrundes, nach außen mündet.

Nach der Erfindung wird demnach eine Maßnahme gesetzt, die eine Luftableitung bewirkt, so daß der vom Luftkeil, wie oben geschildert, herrührende Druck reduziert wird. Dadurch können nun einerseits die Profilelementschwingungen, insbesondere Blockschwingungen, und andererseits Luftschwingungen in den Nuten selbst vermindert werden, wodurch die von dort stammende Rollgeräuschkomponente herabgesetzt wird. Dadurch, daß zumindest das eine Kanalende in einer Nut, insbesondere im Bereich des Nutgrundes, nach außen mündet, wird der oben erwähnte Air-Pumping Effekt reduziert. Als weiterer positiver Effekt ist zu erwähnen, daß solche Kanäle das Wasserableitvermögen des Laufstreifenprofiles erhöhen und somit einen Beitrag zur Verminderung von Aquaplaning leisten.

Bei einer bevorzugten Ausführungsform der Erfindung mündet der Kanal anderends an der Profiloberfläche nach außen. Diese Anordnung bewirkt eine Luftabfuhr von der Profiloberfläche aus.

Eine andere, besonders wirksame Ausgestaltung der Erfindung besteht darin, daß der Kanal anderends im Reifenschulterbereich nach außen mündet.

Bei einer weiteren, wirksamen Ausführungsform der Erfindung mündet der Kanal anderends ebenfalls in einem Profilelementbereich, welcher eine Nut begrenzt, nach außen.

Eine weitere Ausgestaltung der Erfindung besteht darin, daß mit dem Kanal, zumindest abschnittweise, ein Feineinschnitt in Verbindung steht.

Nach einem weiteren Merkmal der Erfindung mündet der Kanal in die Nut im Bereich einer dort vorgesehenen örtlichen Vertiefung.

Dabei kann der Kanal je nach Profilgestaltung in in Umfangsrichtung des Laufstreifens verlaufende Nuten oder in Quernuten einmünden.

Auf die Stabilität der Profilelemente wirkt es sich günstig aus, wenn der Kanal einen von der Profiloberfläche in zumindest im wesentlichen in radialer Richtung verlaufenden Abschnitt aufweist, welcher in einen im radial innen liegenden Bereich des Profilelementes zumindest im wesentlichen parallel zur Profiloberfläche verlaufenden Abschnitt übergeht.

Für die gewünschten Laufstreifeneigenschaften kann es günstig sein, wenn der Kanal einerends in eine im Profilelement ausgebildete Nut einmündet, deren Tiefe geringer ist, als die sonstige Dessintiefe des Laufstreifens.

Eine weitere wirkungsvolle Maßnahme im Rahmen der Erfindung besteht darin, daß sich der Kanal innerhalb des Profilelementes in zwei Kanalzweige aufspaltet.

Bei einer bevorzugten Ausführungsform der Erfindung besitzt der Kanal einen kreisförmigen Querschnitt mit einem Durchmesser von insbesondere 2 bis 6 mm. Der Kanal kann jedoch auch andere Querschnittsformen, beispielsweise einen ovalen Querschnitt, aufweisen.

Der Kanal kann ferner zumindest abschnittweise geradlinig und/oder bogenförmig gekrümmt verlaufen. Der Kanal weist ferner bevorzugt über seine gesamte Länge einen konstanten Querschnitt auf. Eine weitere Ausführungsform kann jedoch auch darin bestehen, daß der Kanal zumindest abschnittweise erweitert und/oder verengt ist, wobei solche Querschnittsänderungen insbesondere über konisch gestaltete Abschnitte erfolgt.

Weitere Merkmale, Vorteile und Einzelheiten der Erfindung werden nun anhand der Zeichnung, die schematisch mehrere Ausführungsbeispiele darstellt, näher beschrieben. Dabei zeigen Fig. 1 eine Draufsicht auf einen Teil eines Laufstreifenprofiles eines Fahrzeugreifens, Fig. 1a einen Schnitt entlang der Linie a-a der Fig. 1, Fig. 1b einen Schnitt entlang der Linie b-b der Fig. 1, Fig. 2 die Draufsicht auf einen Profilblock eines Laufstreifens mit einer zweiten Ausführungsvariante der Erfindung, Fig. 3 bis Fig. 6 weitere Ausführungsformen der Erfindung anhand von Querschnitten durch Profilblöcke bzw. Profilelemente eines Laufstreifens und Fig. 7 eine Draufsicht auf einen Profilblock mit einer weiteren Variante der Erfindung.

In der nachfolgenden Figurenbeschreibung ist unter dem Begriff "Feineinschnitt" eine sehr schmale Nut zu verstehen, deren Breite 0,3 bis 1 mm, insbesondere 0,4 bis 0,6 mm, beträgt.

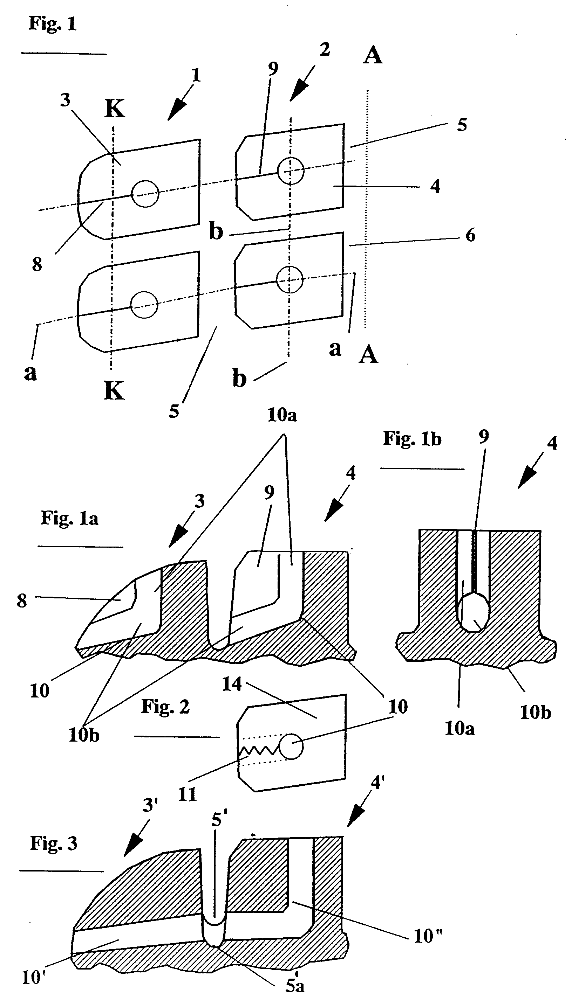

Fig. 1 zeigt schematisch eine Draufsicht auf eine der Hälften eines Laufstreifenprofiles. Die zweite Hälfte kann bezüglich der Umfangsmittellinie A-A symmetrisch gestaltet sein. Die tatsächliche Ausgestaltung des Laufstreifenprofiles ist für die vorliegende Erfindung kaum von Belang, die in Fig. 1 dargestellte Profilausgestaltung dient somit primär illustrativen Zwecken. In der gezeigten Laufstreifenhälfte sind zwei Blockreihen, und zwar eine Mittelblockreihe 2 und eine Schulterblockreihe 1 angeordnet, die sich jeweils aus einer Vielzahl von in Reifenumfangsrichtung aneinandergereihten Profilblöcken 3, 4 zusammensetzen. Umfangsnuten 5 und seitliche Rillen 6 trennen die Profilblöcke 3, 4 voneinander. Die in der Schulterblockreihe 1 eingezeichnete strichlierte Linie K-K kennzeichnet die Grenze der Breite des Laufstreifens in der Bodenaufstandsfläche unter Fahrzeugbedingungen.

Wie aus Fig. 1 in Verbindung mit Fig. 1a ersichtlich ist, ist jeder Profilblock 3, 4 mit einem Feineinschnitt 8, 9 versehen, die im vorliegenden Ausführungsbeispiel, in Draufsicht betrachtet, als gerade verlaufende Feineinschnitte ausgeführt sind. Der in einem Profilblock 4 der mittleren Blockreihe 2 angeordnete Feineinschnitt 9 mündet in die diese Blockreihe von der Schulterblockreihe 1 trennende Umfangsnut 5. Die Feineinschnitte 8 in den Profilblöcken 3 der Schulterblockreihe 1 durchsetzen die Profilblöcke 3 komplett bis zur Reifenschulter. Die etwa in der Profilblockmitte endenden Feineinschnitte 8, 9 münden dort in einen radial verlaufenden Abschnitt 10a eines Kanales 10, welcher Abschnitt 10a auf das 0,7 bis 1,2-fache der Tiefe der Umfangsnuten 5 reichen kann. Am radial inneren Endbereich des Abschnittes 10a schließt ein parallel zur Profiloberseite verlaufender Abschnitt 1 Ob an, in welchen der jeweilige Feineinschnitt 8, 9 von oben her einmündet, so daß ein in einem Profilblock 3 der Schulterblockreihe 1 angeordneter Kanal 10 im Reifenschulterbereich austritt und ein in einem Profilblock 4 der mittleren Blockreihe 2 verlaufender Kanal 10 in die Umfangsnut 5 mündet. Der Kanal 10 besitzt insbesondere einen kreisförmigen Querschnitt, mit einem Durchmesser von 2 bis 8 mm, welcher über die gesamte Länge des Kanales 10 konstant gehalten ist.

Fig. 2 zeigt eine Ausführungsvariante, wo ein zick-zack-förmig verlaufender Feineinschnitt 11 gemeinsam mit einem Kanal 10 in einem Profilblock 4' angeordnet ist.

Bei der Herstellung des Reifens erfolgt eine gemeinsame Einformung von Kanal 10 und Feineinschnitt 8, 9 über entsprechend gestaltete Stahl- bzw. Blechlamellen, die beim Schließen der Vulkanisationsformteile in den unprofilierten Laufstreifen in radialer Richtung eindringen und nach dem Vulkanisationsvorgang beim Öffnen der Vulkanisationsform aus dem fertig geformten Laufstreifen austreten.

Bei der in Fig. 3 dargestellten Ausführungsvariante ist ein Querschnitt durch einen Schulterblock 3' und einem von diesem durch eine Umfangsnut 5' getrennten Profilblock 4' dargestellt. Ein etwa in axialer Richtung verlaufender Kanal 10' durchquert den Schulterblock 3' derart, daß er einerends im Schulterbereich und anderends im Bereich einer örtlich begrenzten Vertiefung 5'a in die Umfangsnut 5' einmündet. Im Bereich einer derartigen örtlichen Vertiefung 5'a ist die Umfangsnut 5' um 2 bis 4 mm tiefer ausgeführt als es der sonstigen Nuttiefe, die im allgemeinen 8 mm beträgt, entspricht. Der Kanal 10' setzt sich im benachbarten Profilblock 4' als Kanal 10'' fort, so daß dieser Kanal 10'' ebenfalls in die Vertiefung 5'a der Umfangsnut 5' einmündet. Der Kanal 10'' verläuft schließlich radial durch den Profilblock 4' und tritt an der Profiloberfläche nach außen.

Der Kanal 10' bzw. 10'' wird bevorzugt und wie dargestellt über seine gesamte Länge mit gleichbleibendem Querschnitt, insbesondere kreisförmigem Querschnitt, mit einem Durchmesser zwischen 2 und 6 mm, ausgeführt. Der Kanal 10', 10'' kann abweichend von dem dargestellten geradlinigen Verlauf auch leicht bogenförmig, insbesondere kreisbogenförmig, gekrümmt verlaufen. Dabei ist es ferner möglich, daß der im Profilblock 4' verlaufende Kanal 10'' den Profilblock 4' analog zum Kanal 10' durchsetzt und somit in die zweite, den Profilblock 4' begrenzende Umfangsnut einmündet. Der Kanal 10', 10'' kann ferner auch im Bereich des Nutgrundes einmünden, ohne daß eine gesonderte örtliche Vertiefung vorgesehen wird.

Die Einformung des Kanales 10', 10'' kann bei entsprechend gestalteten mehrteiligen Vulkanisationsformen über an der Vulkanisationsform befestigte Stifte erfolgen, die beim Schließen der Form in den Laufstreifen eindringen und nach dem Vulkanisationsvorgang beim Öffnen der Reifenform wieder austreten.

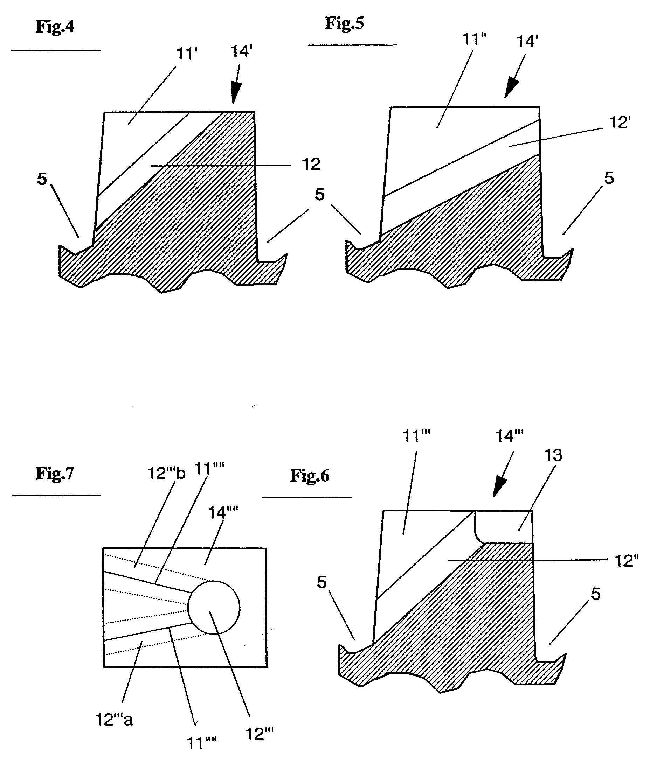

Fig. 4 zeigt eine weitere Möglichkeit der Anordnung eines Kanales 12 gemeinsam mit einem Feineinschnitt 11' anhand eines Querschnittes durch einen Profilblock 14', welcher in diesem Fall ein Profilblock aus dem Laufstreifenmittelbereich ist. Dabei weist der Kanal 12 einen geraden Verlauf auf und tritt einerends an der Laufstreifenoberfläche und anderends an einer Profilblockwand, die eine Nut 5, insbesondere eine Ümfangsnut, begrenzt, nach außen. Ähnlich zu dieser Ausführungsvariante ist die in Fig. 5 dargestellte Ausführungsform. Der mit einem Feineinschnitt 11'', welcher in diesem Fall dem Profilblock 14'' komplett durchquert, kombinierte Kanal 12' weist ebenfalls einen geraden Verlauf auf und tritt an beiden Endbereichen an Profilblockwänden nach außen, die jeweils eine Nut 5 begrenzen. Der dem Profilblock 14'' schräg durchsetzende Kanal 12' besitzt demnach einen Austrittsbereich im Bereich des Nutgrundes der einen Nut 5 und einen Austrittsbereich der relativ nahe an der Laufstreifenoberfläche liegt.

Fig. 6 zeigt eine Ausführungsform, bei der ein mit einem Feineinschnitt 11''' kombinierter Kanal 12'' mit einer Nut 13 gekoppelt ist. Die Nut 13 ist eine Nut von geringer Tiefe, beispielsweise von ca. 2 bis 4 mm. Die Nut 13 ist als Sacknut gestaltet, die mit ihrem offenen Ende in eine der den Profilblock 14''' begrenzenden Nuten einmündet. Am profilblockinneren Endbereich der Nut 13 setzt der Kanal 12'' an, welcher dem Profilblock 14''' schräg durchsetzt und im Bereich des Nutgrundes derjenigen, den Profilblock 14''' begrenzenden Nut nach außen tritt, die der Sacknut 13 gegenüberliegt.

Fig. 7 zeigt schematisch eine Draufsicht auf einen Profilblock 14^{||||}, bei dem eine weitere mögliche Ausgestaltung der Erfindung dargestellt ist. Von der Profilblockoberseite ausgehend verläuft ein Kanal 12''' vorerst in radialer Richtung ins Profilblockinnere, von wo aus sozusagen eine Aufspaltung des Kanals 12''' in zwei Kanalteile 12'''a und 12'''b erfolgt, die wiederum im Bereich des Nutgrundes einer den Profilblock 14^{||||} begrenzenden Nut nach außen treten. Jeder dieser Kanalzweige 12'''a, 12'''b sind, wie schon anhand vorhergehender Ausführungsbeispiele beschrieben, mit je einem Feineinschnitt 11^{||||} kombiniert.

Es wird darauf verwiesen, daß Merkmale der dargestellten Ausführungsbeispiele miteinander kombiniert werden können. Abweichend von den dargestellten Varianten ist es ferner möglich, die Feineinschnitte und damit die Kanäle so anzuordnen, daß sie in eine Querrille bzw. seitliche Rille einmünden. Die Kanäle können auch nur abschnittweise mit Feineinschnitten gekoppelt sein. Es ist ferner denkbar, Feineinschnitte und Kanäle auch in gebogener Form auszugestalten. Auch kann in einem Profilblock mehr als ein Kanal gegebenenfalls gekoppelt mit einem Feineinschnitt vorgesehen werden. Die vorliegende Erfindung ist selbstverständlich auch bei solchen Laufstreifenprofilen anwendbar, wo zumindest im wesentlichen in Umfangsrichtung durchgehende Laufstreifenbänder angeordnet werden, wobei die Kanäle in dem gewünschten Abstand in solchen Laufstreifenbändern ausgebildet werden, und, je nach Anordnung des Laufstreifenbandes, die Kanäle entweder in Umfangsnuten einmünden oder in der Reifenschulter nach außen austreten. Die Kanäle können ferner andere Querschnittformen, beispielsweise in der Form eines Ovales, aufweisen. Auch können die Kanäle zumindest abschnittsweise erweitert oder verengt sein, wobei solche Querschnittsänderungen insbesondere über konisch verlaufende Kanalabschnitte erfolgen.

## Patentansprüche

1. Fahrzeugluftreifen mit einem Laufstreifen, welcher sich aus Profilelementen, wie Blöcken und/oder Laufstreifenbändern, zusammensetzt, und mit Nuten, insbesondere mit in Umfangsrichtung verlaufenden Nuten, Querrillen und dergleichen versehen ist, wobei im Laufstreifen Profilelemente angeordnet sind, die von zumindest einem Kanal durchsetzt sind, welcher an unterschiedlichen Profilelementbereichen nach außen mündet, dadurch gekennzeichnet, daß jeder Kanal (10, 10', 10'', 12, 12', 12'', 12''') zumindest einerends in einer Nut (5, 5'), insbesondere im Bereich des Nutgrundes, nach außen mündet.

2. Fahrzeugluftreifen nach Anspruch 1, dadurch gekennzeichnet, daß der Kanal (10, 10', 10'', 12, 12', 12'', 12''') anderends an der Profiloberfläche nach außen mündet.

3. Fahrzeugluftreifen nach Anspruch 1, dadurch gekennzeichnet, daß der Kanal (10') anderends im Reifenschulterbereich nach außen mündet.

4. Fahrzeugluftreifen nach Anspruch 1, dadurch gekennzeichnet, daß der Kanal (12') anderends ebenfalls in einem Profilelemtenbereich, welcher eine Nut (5) begrenzt, nach außen mündet.

5. Fahrzeugluftreifen nach einem der Ansprüche 1 bis 4, dadurch gekennzeichnet, daß mit dem Kanal (10, 10', 10'', 12, 12', 12'', 12''') zumindest abschnittweise, ein Feineinschnitt (9, 11, 11', 11'', 11''', 11^{||||}) in Verbindung steht.

6. Fahrzeugluftreifen nach einem der Ansprüche 1 bis 5, dadurch gekennzeichnet, daß der Kanal (10', 10'') in die Nut (5') im Bereich einer dort vorgesehenen örtlichen Vertiefung (5'a) mündet.

7. Fahrzeugluftreifen nach einem der Ansprüche 1 bis 6, dadurch gekennzeichnet, daß der Kanal (10, 10', 10'', 12, 12', 12'', 12''') in in Umfangsrichtung des Laufstreifens verlaufende Nuten oder in Quernuten einmündet.

8. Fahrzeugluftreifen nach einem der Ansprüche 1, 2 oder 5 bis 7, dadurch gekennzeichnet, daß der Kanal (10) einen von der Profiloberfläche in zumindest im wesentlichen in radialer Richtung verlaufenden Abschnitt (10a) aufweist, welcher in einen im radial innen liegenden Bereich des Profilelementes zumindest im wesentlichen parallel zur Profiloberfläche verlaufenden Abschnitt (10b) übergeht.

9. Fahrzeugluftreifen nach einem der Ansprüche 1, 2 oder 4 bis 8, dadurch gekennzeichnet, daß der Kanal (12'') einerends in eine im Profilelement (14''') ausgebildete Nut (13) einmündet, deren Tiefe geringer ist, als die sonstige Dessintiefe des Laufstreifens.

10. Fahrzeugluftreifen nach einem der Ansprüche 1 bis 9, dadurch gekennzeichnet, daß sich der Kanal (12''') innerhalb des Profilelementes (14^{||||}) in zwei Kanalzweige (12'''a, 12'''b) aufspaltet.

11. Fahrzeugluftreifen nach einem der Ansprüche 1 bis 10, dadurch gekennzeichnet, daß der Kanal (10, 10', 10'', 12, 12', 12'', 12''') einen kreisförmigen Querschnitt mit einem Durchmesser von insbesondere 2 bis 8 mm besitzt.

12. Fahrzeugluftreifen nach einem der Ansprüche 1 bis 11, dadurch gekennzeichnet, daß der Kanal (10, 10', 10'', 12, 12', 12'', 12''') zumindest über einen Teil seiner Länge geradlinig und/oder bogenförmig gekrümmt verläuft.

13. Fahrzeugluftreifen nach einem der Ansprüche 1 bis 12, dadurch gekennzeichnet, daß der Kanal (10, 10', 10'', 12, 12', 12'') über seine gesamte Länge einen konstanten Querschnitt aufweist.

14. Fahrzeugluftreifen nach einem der Ansprüche 1 bis 13, dadurch gekennzeichnet, daß der Kanal zumindest abschnittweise erweitert und/oder verengt ist, wobei solche Querschnittsänderungen insbesondere über konisch gestaltete Abschnitte erfolgt.

## Claims

1. Vehicle pneumatic tyre with a tread which is composed of tread elements such as blocks and/or tread strips and which is provided with grooves, especially grooves running in the direction of the circumference, cross-grooves and the like, with, arranged in the tread, tread elements which have at least one channel running through them, which channel opens outwards on different areas of the tread elements, characterised in that each channel (10, 10', 10'', 12, 12', 12'' 12''') at at least one end opens outwards in a groove (5, 5'), particularly in the region of the base of the groove.

2. Vehicle pneumatic tyre according to claim 1,
characterised in that
the channel (10, 10', 10'', 12, 12', 12'', 12''') at the other end opens outwards on the tread surface.

3. Vehicle pneumatic tyre according to claim 1,
characterised in that
the channel (10') at the other end opens outwards in the region of the side wall of the tyre.

4. Vehicle pneumatic tyre according to claim 1,
characterised in that
the channel (12') at the other end likewise opens outwards in an area of the tread element bordering on a groove (5).

5. Vehicle pneumatic tyre according to one of claims 1 to 4,
characterised in that
a fine incision (9, 11, 11', 11'', 11''', 11'''') is in contact with the channel (10, 10', 10'', 12, 12', 12'', 12''') at least in sections.

6. Vehicle pneumatic tyre according to one of claims 1 to 5,
characterised in that
the channel (10, 10'') opens into the groove (5') in the region of a local depression (5'a) provided there.

7. Vehicle pneumatic tyre according to one of claims 1 to 6,
characterised in that
the channel (10, 10', 10'', 12, 12', 12'', 12''') discharges into grooves or cross-grooves running in the direction of the circumference of the tread.

8. Vehicle pneumatic tyre according to one of claims 1,2 or 5 to 7,
characterised in that the channel (10) has a section (10a) running at least substantially in a radial direction from the tread surface, which section changes into a section (10b) running at least substantially parallel to the tread surface in the area of the tread element lying radially inwards.

9. Vehicle pneumatic tyre according to one of claims 1,2 or 4 to 8,
characterised in that
the channel (12'') at one end discharges into a groove (13) formed in the tread element (14'''), the depth of which groove is smaller than the rest of the design depth of the tread.

10. Vehicle pneumatic tyre according to one of claims 1 to 9,
characterised in that
the channel (12''') inside the tread element (14'''') divides into two branches (12'''a, 12'''b).

11. Vehicle pneumatic tyre according to one of claims 1 to 10,
characterised in that
the channel (10, 10', 10'', 12, 12', 12'', 12''') has a circular cross-section with a diameter of especially 2 to 8 mm.

12. Vehicle pneumatic tyre according to one of claims 1 to 11,
characterised in that
the channel (10, 10', 10'', 12, 12', 12'', 12''') runs straight and/or curved over part of its length at least.

13. Vehicle pneumatic tyre according to one of claims 1 to 12,
characterised in that
the channel (10, 10', 10'', 12, 12', 12'') has a constant cross-section over its whole length.

14. Vehicle pneumatic tyre according to one of claims 1 to 13,
characterised in that
the channel is enlarged and/or narrowed at least in sections, such alterations to the cross-section being achieved especially by means of conically formed sections.

## Revendications

1. Pneumatique de véhicule possédant une bande de roulement qui est constituée d'éléments de sculpture, tels que des blocs et/ou des rubans de la bande de roulement, et est pourvue de gorges, notamment de gorges qui s'étendent dans la direction transversale, de rainures transversales et analogues, et dans lequel dans la bande de roulement sont disposés des éléments de sculpture qui sont traversés par au moins un canal qui débouche à l'extérieur au niveau de parties différentes d'éléments de sculpture, caractérisé en ce que chaque canal (10,10',10'', 12, 12', 12'', 12''') débouche à l'extérieur, au moins par une extrémité, dans une gorge (5,5'), notamment dans la zone du fond de la gorge.

2. Pneumatique pour véhicule selon la revendication 1, caractérisé en ce que le canal (10,10',10'',12,12', 12'',12''') débouche à l'extérieur, par son autre extrémité, au niveau de la surface de la sculpture.

3. Pneumatique pour véhicule selon la revendication 1, caractérisé en ce que le canal (10') débouche à l'extérieur, par son autre extrémité, dans la zone de l'épaulement du pneumatique.

4. Pneumatique pour véhicule selon la revendication 1, caractérisé en ce que le canal (12') débouche à l'extérieur, par son autre extrémité, également dans une partie d'élément de sculpture qui limite une gorge (5).

5. Pneumatique pour véhicule selon l'une des revendications 1 à 4, caractérisé en ce qu'une fine encoche (9,11,11',11'',11''',11'''') est reliée, au moins par endroits, au canal (10,10',10'',12,12',12'',12''').

6. Pneumatique pour véhicule selon l'une des revendications 1 à 5, caractérisé en ce que le canal (10',10'') débouche dans la gorge (5') au niveau d'un renfoncement local (5'a) prévu en cet endroit.

7. Pneumatique pour véhicule selon l'une des revendications 1 à 6, caractérisé en ce que le canal (10,10',10'', 12,12',12'',12''') débouche dans des gorges qui s'étendent dans la direction circonférentielle du pneumatique de la bande de roulement, ou dans des gorges transversales.

8. Pneumatique pour véhicule selon l'une des revendications 1, 2 ou 5 à 7, caractérisé en ce que le canal (10) possède une section (10a) qui s'étend à partir de la surface de la sculpture dans une direction au moins essentiellement radiale et qui se prolonge par une section (10b) qui s'étend au moins essentiellement parallèlement à la surface de la sculpture dans la zone, intérieure du point de vue radial, de l'élément de sculpture.

9. Pneumatique pour véhicule selon l'une des revendications 1, 2 ou 4 à 8, caractérisé en ce que le canal (12'') débouche, par une extrémité, dans une gorge (13) formée dans l'élément de sculpture (14''') et dont la profondeur est inférieure à la profondeur, présente par ailleurs, du dessin de la bande de roulement.

10. Pneumatique pour véhicule selon l'une des revendications 1 à 9, caractérisé en ce que le canal (12''') est subdivisé, à l'intérieur de l'élément de sculpture (14''''), en deux branches de canaux (12'''a, 12'''b).

11. Pneumatique pour véhicule selon l'une des revendications 1 à 10, caractérisé en ce que le canal (10,10',10'',12,12',12'',12''') possède une section transversale circulaire ayant un diamètre compris notamment entre 2 et 8 mm.

12. Pneumatique pour véhicule selon l'une des revendications 1 à 11, caractérisé en ce que le canal (10, 10',10'',12,12',12'',12''') s'étend au moins sur une partie de sa longueur, avec une disposition rectiligne et/ou une disposition de forme arquée.

13. Pneumatique pour véhicule selon l'une des revendications 1 à 12, caractérisé en ce que le canal (10,10',10'',12,12',12'') possède une section transversale constante, sur toute sa longueur.

14. Pneumatique pour véhicule selon l'une des revendications 1 à 13, caractérisé en ce que le canal est élargi et/ou rétréci au moins par endroits, de telles variations de la section transversale étant obtenues notamment au moyen de parties de forme conique.
